# EUROPÄISCHE PATENTANMELDUNG

(11) **EP 1 894 966 A1**
(43) Veröffentlichungstag der Anmeldung: **05.03.2008**
(21) Anmeldenummer: 06119931.1
(22) Anmeldetag: 31.08.2006
(51) Int. Cl.: C08K 5/548, C09D 183/08, C08J 7/04, C09D 4/00, C08G 77/28, C09J 5/02, C03C 17/30

(54) **Wässrige Haftvermittlerzusammensetzung umfassend ein Aminosilan und ein Mercaptosilan**

(71) Anmelder: Sika Technology AG, 6340 Baar (CH)
(72) Erfinder: Sutter, Jolanda, 4104, Oberwil (CH); Huck, Wolf-Rüdiger, 8044, Zürich (CH)

(57) **Zusammenfassung**

Die vorliegende Erfindung betrifft wässrige Haftvermittlerzusammensetzungen welche mindestens ein Aminosilan und/oder eine Aminosiloxan sowie mindestens ein Mercaptosilan enthalten. Die Haftvermittlerzusammensetzungen eigenen sich insbesondere als Primer oder Haftvermittlervoranstriche für Kleb und Dichtstoffe. Sie sind insbesondere geeignet für das Verkleben von Scheiben von Fahrzeugen. Insbesondere bei Scheiben mit Silberaufdrucken konnte eine ausserordentlich hohe Haftung gefunden werden.

## Beschreibung

### Technisches Gebiet

Die Erfindung betrifft das Gebiet der wässrigen Haftvermittlerzusammensetzungen.

### Stand der Technik

Haftvermittlerzusammensetzungen werden seit langem verwendet, um die Haftung zu verbessern. Typischerweise basieren derartige Zusammensetzungen auf Organosilanen. Insbesondere werden derartige Haftvermittlerzusammensetzungen als Primer, d.h. als Haftverbesserungsvoranstrich, verwendet. Derartige Zusammensetzungen oder Primer weisen üblicherweise inerte leicht flüchtige Lösungsmittel auf, um ein schnelles Ablüften zu gewährleisten. Allerdings kommen Lösungsmittel, besonderes solche, welche als VOC (Volatile Organic Compounds) bezeichnet werden, zunehmend unter Beschuss und der Markt verlangt zunehmend lösungsmittelarme und vor allem lösungsmittelfreie, beziehungsweise VOC freie, Haftvermittlerzusammensetzungen.

Wässrige Haftvermittlerzusammensetzungen sind bekannt. Sie weisen jedoch einige Nachteile auf. So beschreibt EP-A-0 577 014 einen wässrigen Primer, welcher ein Aminosilan oder ein Mercaptosilan aufweist. WO 2005/093002 A1 offenbart zweikomponentige Haftvermittlerzusammensetzungen, welche in einer bevorzugten Ausführungsform eine wässrige Haftvermittlerzusammensetzung, welche eine Mischung eines Alkyl-Trialkoxysilans mit einem Aminoalkyl-Trialkoxysilan und/oder Mercaptoalkyl-Trialkoxysilan umfassen, darstellt.

Es hat sich jedoch im Rahmen der vorliegenden Erfindung überraschenderweise gezeigt, dass bei derartigen Mischungen die Haftung auf Glas, insbesondere nach Wasserlagerung, stark verschlechtert wird, sobald der Anteil von Alkylsilan ein gewisses Mass überschreitet.

Ein besonders wichtiges Einsatzgebiet der Haftvermittlerzusammensetzung ist der Fahrzeugbau, insbesondere beim Einglasen, d.h. das Verkleben von Scheiben mit Fahrzeugkarosserien. Die Scheiben der neuesten Generation weisen integrierte Antennen und damit verbunden im Scheibenrandbereich - wo der Klebstoff appliziert wird - Oberflächen aus Silber, Silberbasierenden Zusammensetzungen oder Legierungen auf. Auf diesen Oberflächen weist jedoch ein Grossteil der verwendeten Polyurethanklebstoffe auch unter Benutzung von bekannten Haftvermittlerzusammensetzungen Haftprobleme auf.

### Darstellung der Erfindung

Die Aufgabe der vorliegenden Erfindung ist es daher, wässrige Zusammensetzungen zur Verfügung zu stellen, welche die Nachteile des Standes des Technik überwinden. Überraschenderweise wurde nun gefunden, dass wässrige Haftvermittlerzusammensetzungen gemäss Anspruch 1 diese Aufgabe lösen.

Es hat sich überraschenderweise gezeigt, dass die erfindungsgemässen Haftvermittlerzusammensetzungen bei der Verwendung für feuchtigkeitshärtende einkomponentigen Polyurethanklebstoffen zu guter Haftung auf einer Vielzahl von Untergründen führt. Insbesondere konnte gezeigt werden, dass derartige wässrige Haftvermittlerzusammensetzungen zu guten Haftungen auf Glas, Keramik und Silber, bzw. Silberbasierenden Zusammensetzungen, führt.

Insbesondere wurde gefunden, dass der Einsatz von Mercaptosilanen zu einer starken Verbesserung der Haftung auf Silber, beziehungsweise Silberbasierenden Zusammensetzungen oder Legierungen, führt.

Dies ist insbesondere im Fahrzeugbau für das Einglasen mittels Polyurethanklebstoffen von Scheiben mit integrierter Antenne, die Bereiche von derartigen Oberflächen aufweisen, wichtig.

Es wurde weiterhin gefunden, dass sich sehr lagerstabile erfindungsgemässe Haftvermittlerzusammensetzungen formulieren lassen.

### Wege zur Ausführung der Erfindung

Die vorliegende Erfindung betrifft wässrige Haftvermittlerzusammensetzungen, welche mindestens ein Aminosilan der Formel (I) oder mindestens ein Aminosiloxan **AS**, welches aus einer Kondensationsreaktion eines Aminosilans der Formel (I) mit mindestens einem weiteren Silan erhalten wird, sowie mindestens ein Mercaptosilan der Formel (II) umfassen und welche entweder einen Gehalt von 0 bis 45 Gew.-%, insbesondere 0 bis 25 Gew.-%, bezogen auf das Gewicht des Aminosilans oder des Aminosiloxans **AS**, an Alkylsilanen aufweisen oder in welcher das Verhältnis der Anzahl Mole Alkylsilane zur Anzahl Mole Aminosilan oder Aminosiloxan **AS** einen Wert von 0 - 0.60, insbesondere 0 - 0.33 beträgt. 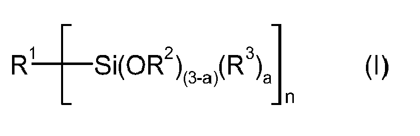 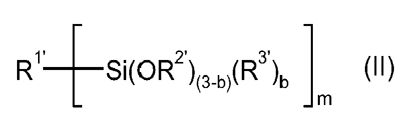 wobei
R¹ für einen n-wertigen organischen Rest mit mindestens einer primären und/oder sekundären Aminogruppe steht,
R^{1'} für einen m-wertigen organischen Rest mit mindestens einer Mercaptogruppe steht,
R² und R^{2'} unabhängig von einander für H oder eine Alkylgruppe mit 1 bis 4 C-Atome oder für eine Acylgruppe steht;
R³ und R^{3'} unabhängig von einander für H oder für eine Alkylgruppe mit 1 bis 10 C-Atome steht;
a und b unabhängig von einander für einen Wert von 0, 1 oder 2 steht;
und n und m unabhängig voneinander für die Werte 1, 2, 3 und 4 steht.

Der hier verwendete Term "unabhängig von einander" bedeutet hierbei nicht nur "unabhängig von den anderen Inhaltsstoffen" sondern auch "unabhängig innerhalb desselben Moleküls". So sind beispielsweise auch Hydroxy-Dimethoxy-Aminosilane (R²=Methyl, R²=Methyl, R²=H) möglich.

Im gesamten vorliegenden Dokument bezeichnen die Terme "Organosilane" Silane, welche mindestens einen organischen Rest aufweisen, welcher über eine Si-C-Bindung an das Siliziumatom gebunden ist. Als "Alkylsilane" werden Organosilane bezeichnet, deren organischer Rest eine Kohlenwasserstoffgruppe ist. Diese Alkylsilane weisen keine weiteren über C-Si-Bindungen gebundenen organische Reste mit funktionellen Gruppen mit Heteroatomen, wie Amino- oder Mercaptogruppen, auf. Als "Aminosilane", beziehungsweise "Mercaptosilane" werden Organosilane bezeichnet, deren organischer Rest eine Aminogruppe oder eine Mercaptogruppe aufweist. "Tetraalkoxysilane" stellen demzufolge gemäss dieser Definition keine Organosilane dar. Als "Aminosiloxan" werden Verbindungen bezeichnet, welche mindestens eine Si-O-Si-Bindung aufweisen und mindestens zwei organische Reste aufweisen, welche über eine Si-C-Bindung an die Siliziumatome gebunden sind. Mindestens einer dieser organischen Reste weist dabei eine Aminogruppe auf.

Die Zusammensetzung weist mindestens ein Aminosilan der Formel (I) oder ein Aminosiloxan **AS**, welches aus einer Kondensationsreaktion eines Aminosilans der Formel (I) mit mindestens einem weiteren Silan erhalten wird, auf. Besonders bevorzugt sind Alkoxysilane, d.h. Aminosilane der Formel (I), bei denen R² für eine Alkylgruppe mit 1 bis 4 C-Atome steht. Besonders bevorzugt sind Methoxy- (R² = Methyl) und Ethoxysilane (R² = Ethyl). Als besonders vorteilhaft haben sich Aminosilane mit Trialkoxygruppen (a = 0), insbesondere Trimethoxysilangruppen, erwiesen.
In Gegenwart von Wasser können Alkoxysilane hydrolysieren und es entstehen Silanole, d.h. Silane mit Si-OH Gruppierungen (R² = H). Insbesondere ist es hierbei möglich, dass auch teilhydrolysierte Produkte entstehen. Als Endstufe derartiger Hydrolysereaktionen stehen Silantriole.

Als Aminosilane sind insbesondere Aminosilane geeignet, welche ausgewählt sind aus der Gruppe bestehend aus 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-Methyl-3-Aminopropyl-trimethoxysilan, N-Ethyl-3-Aminopropyl-trimethoxysilan, N-Butyl-3-Aminopropyl-trimethoxysilan, N-Cyclohexyl-3-Aminopropyl-trimethoxysilan, N-Phenyl-3-Aminopropyl-trimethoxysilan, N-Methyl-3-Amino-2-methylpropyl-trimethoxysilan, N-Ethyl-3-Amino-2-methylpropyl-trimethoxysilan, N-Ethyl-3-Aminopropyl-dimethoxy-methylsilan, N-Phenyl-4-Aminobutyl-trimethoxysilan, N-Phenyl-aminomethyl-dimethoxymethylsilan, N-Cyclohexyl-aminomethyl-dimethoxymethylsilan, N-Methyl-aminomethyl-dimethoxymethylsilan, N-Ethylaminomethyl-dimethoxymethylsilan, N-Propyl-aminomethyl-dimethoxymethylsilan, N-Butyl-aminomethyl-dimethoxymethylsilan; N-(2-Aminoethyl)-3-aminopropyl-trimethoxysilan, 3-[2-(2-Aminoethylamino)-ethylamino]-propyl-trimethoxysilan, Bis(trimethoxysilylpropyl)amin, sowie deren Analoga mit Ethoxy-oder Isopropoxygruppen anstelle der Methoxygruppen am Silicium.

In einer Ausführungsform ist das Aminosilan der Formel (I) ein Aminosilan der Formel (V)

H₂N-R⁵-Si(OR²)₍₃₋ₐ₎(R³)ₐ (V)

wobei R⁵ für eine lineare oder verzweigte Alkylengruppe mit 1 bis 6 C-Atomen, insbesondere für Propylen, steht. Als besonders bevorzugt gilt hierbei 3-Aminopropyltrimethoxysilan.

In einer bevorzugten Ausführungsform weist das Aminosilan der Formel (I) sekundäre Aminogruppen auf. Insbesondere handelt es sich hierbei um Aminosilane der Formel (VI) oder (VII) oder (VIII). 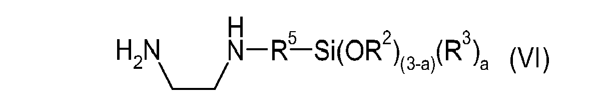 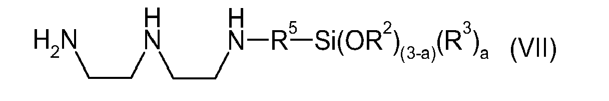 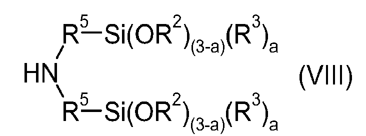 wobei R⁵ für eine lineare oder verzweigte Alkylengruppe mit 1 bis 6 C-Atomen, insbesondere für Propylen, steht. Als besonders bevorzugt gezeigt haben sich N-(2-Aminoethyl)-3-aminopropyl-trimethoxysilan, 3-[2-(2-Aminoethylamino)-ethylamino]-propyl-trimethoxysilan und Bis(trimethoxysilylpropyl)amin.
Es hat sich als besonders vorteilhaft herausgestellt, wenn mehrere Aminosilane der Formel (I) in der Zusammensetzung, vorhanden sind. Vorzugsweise weist mindestens eines der Aminosilane die Formel (VI) auf.

In einer Ausführungsform weist die Zusammensetzung Aminosiloxane AS auf. Diese Aminosiloxane werden aus einer Kondensationsreaktion eines Aminosilans der Formel (I) mit mindestens einem weiteren Silan erhalten. Dem Fachmann ist klar, dass die an der Kondensation beteiligten Silane vorzugsweise hydrolysiert oder zumindest teilhydrolysiert sein sollten. Als beteiligte Silane sind insbesondere Alkylsilane bevorzugt. Es entsteht hierbei ein Aminosiloxan, welches neben Aminogruppen zusätzlich Alkylgruppen aufweisen. Der Kondensationsgrad kann unterschiedlich sein. Es können Dimere, Trimere oder Oligomere sein. Die Aminosiloxane **AS** können noch Alkoxysilangruppen aufweisen. Die Aminosiloxane **AS** sind vorzugsweise in Wasser löslich oder mischbar oder lassen sich dispergieren. Derartige Aminosiloxane **AS** sind kommerziell erhältlich zum Beispiel als Dynasylan® HDYROSIL 2627, Dynasylan® HDYROSIL 2776 oder Dynasylan® HDYROSIL 2929 von Degussa AG, Deutschland.

Die Zusammensetzung weist mindestens ein Mercaptosilan der Formel (II) auf. Besonders bevorzugt sind Alkoxysilane, d.h. Mercaptosilane der Formel (II), bei denen R^{2'} für eine Alkylgruppe mit 1 bis 4 C-Atome steht. Besonders bevorzugt sind Methoxy- (R^{2'} = Methyl) und Ethoxysilane (R^{2'} = Ethyl). Als besonders vorteilhaft haben sich Mercaptosilane mit Trialkoxygruppen (b = 0), insbesondere Trimethoxysilangruppen, erwiesen.

In Gegenwart von Wasser können Alkoxysilane hydrolysieren und es entstehen Silanole, d.h. Silane mit Si-OH Gruppierungen (R^{2'} = H). Insbesondere ist es hierbei möglich, dass auch teilhydrolysierte Produkte entstehen. Als Endstufe derartiger Hydrolysereaktionen stehen Silantriole.

Bevorzugt weist das Mercaptosilan der Formel (II) die Formel (IX) auf.

HS-R^{5'}-Si(OR^{2'})_{(3-b)}(R^{3'})_{b} (IX)

wobei R^{5'} für eine lineare oder verzweigte Alkylengruppe mit 1 bis 6 C-Atomen, insbesondere für Propylen, steht.

Als besonders bevorzugte Mercaptosilane gelten 3-Mercaptopropyl-trimethoxysilan und 3-Mercaptopropyl-triethoxysilan.

Weiterhin weist die wässrige Haftvermittlerzusammensetzung entweder einen Gehalt von 0 bis 45 Gew.-%, insbesondere 0 bis 25 Gew.-%, bezogen auf das Gewicht des Aminosilans oder des Aminosiloxans, an Alkylsilanen auf. Oder das Verhältnis der Anzahl Mole Alkylsilane zu Anzahl Mole Aminosilan oder Aminosiloxan **AS** beträgt in der wässrigen Haftvermittlerzusammensetzungeinen einen Wert von 0 - 0.60, insbesondere 0 - 0.33. Ist der Gehalt an Alkylsilanen grösser, wird die Haftung, insbesondere auf Glas, zunehmend verschlechtert. Bevorzugt ist die wässrige Haftvermittlerzusammensetzung jedoch frei von Alkylsilanen. Derartige Alkylsilan-freie wässrige Haftvermittlerzusammensetzung weisen sowohl gute Haftung auf Glas als auch auf Silber, bzw. Silber-basierenden Zusammensetzungen, auf.

Als Alkylsilane gelten insbesondere Alkylsilane der Formel (III).

R^{1"}-Si(OR^{2"})_{(3-c)}(R^{3"})_{c} (III);

wobei
R^{1"} für eine gesättigte oder ungesättigte Alkylgruppe oder Aryl- oder Aralkylgruppe steht;
R^{2"} unabhängig von einander für H oder eine Alkylgruppe mit 1 bis 4 C-Atome oder für eine Acylgruppe steht;
R^{3"} unabhängig von einander für H oder für eine Alkylgruppe mit 1 bis 10 C-Atome steht;
und c für einen Wert von 0, 1 oder 2 steht;

Es wurde gefunden, dass Alkylsilane die Haftung auf Glas negativ beeinflussen.

Weiterhin ist es bevorzugt, dass die wässrige Haftvermittlerzusammensetzung im Wesentlichen frei, bevorzugt frei, von Organosilanen OS ist, deren organische Rest, welcher über eine Si-C-Bindung an das Siliziumatom gebunden ist, mindestens eine funktionelle Gruppe aufweist, welche mit der Aminogruppe des Aminosilans der Formel (I) oder des Aminosiloxans AS oder mit der Mercaptogruppe des Mercaptosilans der Formel (II) reagieren kann.

Besonders bevorzugt ist die wässrige Haftvermittlerzusammensetzung im Wesentlichen frei, bevorzugt frei, von Organosilanen ist, deren organischer Rest, welcher über eine Si-C-Bindung an das Siliziumatom gebunden ist, Hydroxylgruppen aufweist.

Unter "im Wesentlichen frei" wird hier ein Gehalt von weniger als 3 Gew.-%, insbesondere von weniger als 1 Gew.-%, bezogen auf das Gewicht der wässrigen Zusammensetzung, verstanden.

Als besonders vorteilhaft hat es sich jedoch erwiesen, dass die wässrige Haftvermittlerzusammensetzung zusätzlich mindestens ein Tetraalkoxysilan der Formel (IV) aufweist

Si(OR⁴)₄ (IV)

wobei R⁴ unabhängig von einander für H oder eine Alkylgruppe mit 1 bis 4 C-Atome oder für eine Acylgruppe,insbesondere Acetylgruppe,steht. Derartige Tetraalkoxysilane sind beispielsweise Tetramethoxysilan, Tetraethoxysilan, Tetraisopropoxysilan, Tetrapropoxysilan, Tetrabutoxysilan und Tetraacetoxysilan. Als besonders bevorzugt hat sich Tetraethoxysilan erwiesen.

Die wässrige Zusammensetzung kann weitere Bestandteile umfassen. Derartige zusätzliche Bestandteile sind Tenside, Säuren, Katalysatoren, Cosolvents, Biozide, Antiabsetzmittel, Stabilisatoren, Inhibitoren, Pigmente, Farbstoffe, Korrosionsschutzmittel, Geruchsstoffe, UV-Indikatoren, Thixotropiermittel, Füllstoffe, Entschäumer, weitere Organosilane, Titanate und dergleichen.

Als Cosolvents werden mit Wasser mischbare Lösungsmittel, wie beispielsweise Alkohole oder Ether oder Ketone, verstanden. Es ist jedoch bevorzugt, dass derartige Lösungsmittel lediglich in einer kleinen Menge, d.h. typischerweise weniger als 10 Gew.-% bezogen auf das Wasser, verwendet werden. Besonders bevorzugt ist die Zusammensetzung -abgesehen von Spuren von Alkoholen, welche sich aus der Hydrolyse der in der wässrigen Zusammensetzung eingesetzten Alkoxysilanen ergeben- frei von derartigen Cosolvents. Wird ein grösserer Gehalt an Lösungsmittel eingesetzt, verstärkt sich die VOC-Problematik wiederum, deren Vermeidung ja mit ein Hauptgrund für den Einsatz von wässrigen Zusammensetzungen darstellt.

Tenside sind bevorzugte zusätzliche Bestandteile der wässrigen Zusammensetzung.

Als Tenside können natürliche oder synthetische Stoffe verwendet werden, welche in Lösungen die Oberflächenspannung des Wassers oder anderer Flüssigkeiten herabsetzen. Als Tenside, auch Netzmittel genannt, können anionische, kationische, nichtionische oder ampholytische Tenside oder deren Mischungen verwendet werden.

Beispiele für anionische Tenside sind Carboxylat-, Sulfat-, Phosphat-oder Sulfonat-Gruppen aufweisende Tenside, wie zum Beispiel Aminosäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate.

Zu den nichtionischen Tensiden, den sogenannten Niotensiden, gehören beispielsweise Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenyl-polyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alkylgruppen abgeschlossen sein können.

Beispiele für kationische Tenside sind quaternäre Ammonium- oder Phosphoniumverbindungen, wie zum Beispiel Tetraalkylammoniumsalze, N-,N-dialkylimidazolinverbindungen, Dimethyldistearyl-ammoniumverbindungen, oder N-Alkylpyridinverbindungen, insbesondere Ammoniumchloride.

Zu den ampholytischen oder amphoterischen Tensiden gehören amphotere Elektrolyte, sogenannte Ampholyte, wie zum Beispiel Aminocarbonsäuren, und Betaine.

Derartige Tenside sind kommerziell breit erhältlich.

Besonders geeignet sind alkoxylierte Alkohole. Insbesondere als geeignet gezeigt haben sich alkoxylierte nichtionische Fluorotenside, insbesondere Zonyl® FSO-100, welches bei ABCR, Deutschland kommerziell erhältlich ist, alkoxylierte Alkohole oder alkoxylierte Alkylphenole, insbesondere Antarox FM 33, welches kommerziell bei Rhodia kommerziell erhältlich ist.

Weiterhin sind sehr bevorzugt alkoxylierte Fettalkohole, insbesondere jener wie er als Hydropalat® 120 von Cognis kommerzialisiert wird.

Säuren sind ebenfalls bevorzugte zusätzliche Bestandteile der wässrigen Zusammensetzung. Die Säure kann organisch oder anorganisch sein. Organische Säuren sind einerseits Carbonsäuren, insbesondere eine Carbonsäure, welche ausgewählt ist aus der Gruppe umfassend Ameisen-, Essig-, Propion-, Trifluoressig-, Oxal-, Malon-, Bernstein-, Malein-, Fumar- und Zitronensäure sowie Aminosäuren, insbesondere Asparginsäure und Glutaminsäure. Bevorzugt sind Säuren die einen pKₐ zwischen 4.0 und 5 aufweisen. Unter "pKₐ" versteht der Chemiker bekannterweise den negativen dekadischen Logarithmus der Säuredissoziationskonstante Kₐ: pKₐ = -log₁₀Kₐ.

Als Carbonsäure ist Essigsäure bevorzugt.

Organische Säuren sind anderseits insbesondere solche die einen Schwefelatom oder ein Phosphoratom enthalten. Derartige organische Säuren sind insbesondere organische Sulfonsäuren. Unter organischer Sulfonsäure werden Verbindungen verstanden, welche einen Kohlenstoff-Atome aufweisenden organischen Rest sowie mindestens eine funktionelle Gruppe -SO₃H aufweisen.

Die aromatische Sulfonsäure kann ein- oder mehrkernig sein und es können eine oder mehrere Sulfonsäure-Gruppen vorhanden sein. Beispielswiese können dies 1- oder 2-Napthalinsulfonsäure, 1,5-Napthalindisulfonsäure, Benzolsulfonsäure oder Alkylbenzolsulfonsäuren sein.

Bevorzugte aromatische Säuren sind diejenigen, welche die Formel (X) aufweisen

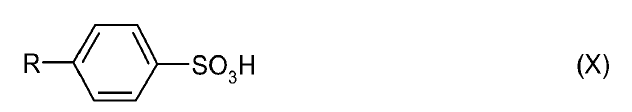

R steht hierbei für einen Alkylrest mit 1 bis 18 Atomen. Bevorzugt steht R für eine Methyl- oder Dodecyl-Gruppe, insbesondere für eine Dodecyl-Gruppe.

Die Säure kann weiterhin eine anorganische Säure sein. als anorganische Säuren haben sich insbesondere solche als geeignet gezeigt, welche ein Schwefelatom oder ein Phosphoratom aufweisen.

Als Phosphoratome aufweisende Säuren gelten insbesondere Phosphorsäure, Phosporige Säure, Phosponsäure, Phosphonige Säure.

Als Schwefelatome aufweisende Säuren gelten insbesondere Schwefelsäuren, insbesondere Schwefelsäure, schweflige Säuren, Perschwefelsäure, Dischwefelsäure (=Pyroschwefelsäure), Dischwefelige Säure, Dithionsäure, Dithionige Säure, Thioschwefelsäure oder Thioschweflige Säure.

In einer bevorzugten Ausführungsform besteht die wässrige Haftvermittlerzusammensetzung aus Wasser, mindestens einem Aminosilan der Formel (I), mindestens einem Mercaptosilan der Formel (II), gegebenenfalls mindestens einem Tetraalkoxysilan, sowie der daraus möglichen Hydrolyse- und / oder Kondensationsprodukte.

In einer weiteren bevorzugten Ausführungsform besteht die wässrige Haftvermittlerzusammensetzung aus Wasser, mindestens einem Aminosilan der Formel (I), mindestens einem Mercaptosilan der Formel (II), mindestens einem Tensid, mindestens einer Säure, gegebenenfalls mindestens einem Tetraalkoxysilan, sowie der daraus möglichen Hydrolyse- und / oder Kondensationsprodukte.

In einer weiteren bevorzugten Ausführungsform besteht die wässrige Haftvermittlerzusammensetzung aus Wasser, mindestens einem Aminosilan der Formel (I), mindestens einem Mercaptosilan der Formel (II) und gegebenenfalls einem Tensid und einer Säure, insbesondere einer organischen Säure, sowie der daraus möglichen Hydrolyse- und / oder Kondensationsprodukte.

In der wässrigen Haftvermittlerzusammensetzung beträgt der Gewichtsanteil der Summe von Aminosilan der Formel (I), Aminosiloxan **AS**, Mercaptosilan der Formel (II) und Wasser sowie, falls vorhanden, Tetraalkoxysilan der Formel (IV) vorteilhaft von mehr als 80 Gew.-%, insbesondere mehr als 90 Gew.-%, am Gewicht der wässrigen Haftvermittlerzusammensetzung.

Der Gewichtsanteil der Summe von Aminosilan der Formel (I), Aminosiloxan **AS,** Mercaptosilan der Formel (II) und - falls vorhanden - Tetraalkoxysilan der Formel (IV) beträgt vorteilhaft mehr als 0.1 Gew.-%, insbesondere zwischen 0.1 und 10 Gew.-%, bevorzugt zwischen 0.1 und 5 Gew. -%, meist bevorzugt zwischen 0.5 bis 2 Gew.-%, am Gewicht der wässrigen Haftvermittlerzusammensetzung.

Das Gewichtsverhältnis der Summe von Aminosilan der Formel (I) und Aminosiloxan **AS** zu Mercaptosilan der Formel (II) beträgt vorteilhaft 1:10 bis 10:1, insbesondere 1:2 bis 2:1, bevorzugt 1:1.5 bis 1.5: 1.

Die wässrige Haftvermittlerzusammensetzung liegt vorzugsweise als zweikomponentige Zusammensetzung bestehend aus einer ersten Komponente **K1** und einer zweiten Komponente **K2** vor. Hierbei ist es vorteilhaft wenn die erste Komponente **K1** mindestens das Aminosilan der Formel (I) oder mindestens das Aminosiloxan **AS** und das Mercaptosilan der Formel (II) und - falls vorhanden - das Tetraalkoxysilan der Formel (IV) umfasst, während die zweite Komponente **K2** mindestens Wasser umfasst.

Falls die Zusammensetzung ein Tensid und/oder eine Säure umfasst, kann es und/oder sie ein Bestandteil der ersten Komponente **K1** und/oder der zweiten Komponente **K2** sein. Vorteilhaft ist es jedoch, dass das Tensid ein Bestandteil der zweiten Komponente **K2** ist. Weiterhin vorteilhaft ist es dass die Säure ein Bestandteil der zweiten Komponente **K2** ist.

Ein weiterer Aspekt der vorliegenden Erfindung stellt eine Packung dar. Die Packung besteht aus einer Verpackung mit zwei Kammern, welche durch mindestens eine Trennwand voneinander getrennten Kammern aufweist und einer wässrigen zweikomponentigen Haftvermittlerzusammensetzung, wie sie vorgängig beschrieben wurde auf. Deren erste Komponente **K1** ist in der ersten Kammer und die zweite Komponente **K2** in der zweiten Kammer vorhanden.

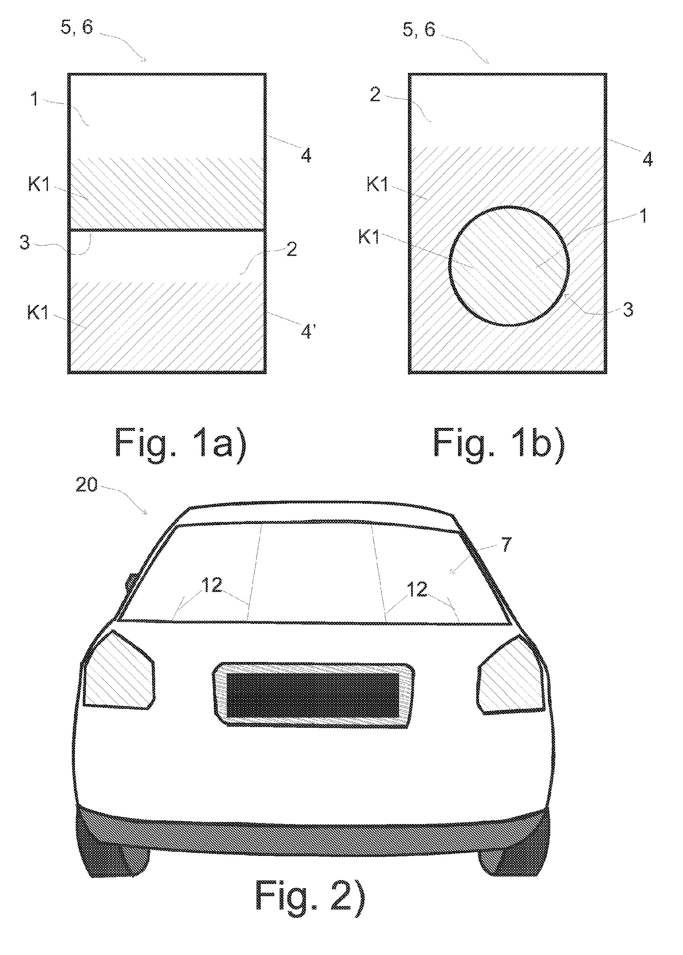

Figuren 1a) und 1b) stellen schematisch Querschnitte durch zwei Ausführungsformen dar. Die Packung 6 besteht aus einer Verpackung 5, welche zwei durch mindestens eine Trennwand 3 voneinander getrennten Kammern 1,2 aufweist; und der zweikomponentigen Zusammensetzung, deren ersten Komponente K1 in der ersten Kammer 1 und deren zweiten Komponenten K2 in der zweiten Kammer 2 vorliegen.

In Figur 1a) ist eine Ausführungsform gezeigt, in welcher die Trennwand 3 sich zwischen den zwei Aussenwänden 4,4' der ersten und zweiten Kammer 1,2 erstreckt.

Figur 1b) zeigt eine Ausführungsform, in welcher die erste Kammer 1 innerhalb der zweiten Kammer 2 angeordnet ist und somit die erste Kammer 1 vollständig von der zweiten Kammer umgeben ist und die erste Kammer 1 vollständig von der Trennwand 3 begrenzt ist.

Derartige Packungen eigenen sich sehr gut zum Lagern der zweikomponentigen Haftvermittlerzusammensetzungen. Bei Bedarf können vor der Applikation die zwei Komponenten gemischt werden. Falls die Trennwand 3 aus einem Material gefertigt ist, welches durch Aufbringung von Druck bricht oder einreisst, kann das Mischen durch ein Aufbringen eines Druckes auf die Aussenwände 4,4' erfolgen, wodurch die Trennwand 3 zum Brechen oder Bersten gebracht werden kann. Das Aufbringen des Druckes erfolgt typischerweise durch Krafteinwirkung. Diese Krafteinwirkung ist bevorzugt eine Schlageinwirkung oder Verbiegen der Verpackung. Das Material der Trennwand 3 ist typischerweise aus Glas, Aluminium, einer Aluminiumlegierung, aus einem dünnen Kunststoff oder einem Verbundmaterial gefertigt. Die Trennwand 3 muss in einer Dicke gefertigt sein, dass sie nicht bereits durch eine unbeabsichtigte Krafteinwirkung, wie sie beispielsweise üblicherweise bei Transporten vorkommen, bricht. Die Aussenwand 4,4' muss derart gestaltet sein, dass sie bei der Aufbringung des Druckes, der zum Brechen der Trennwand 3 führt, nicht bricht oder einreisst. Die Aussenwand 4,4' ist entweder aus einem Metall oder einem elastischen Kunststoff gefertigt. Das Vermischen der zwei Komponenten kann durch Schütteln unterstützt werden. Die gemischten Komponenten können durch eine Auslassöffnung in der Aussenwand der Verpackung (nicht dargestellt in Figuren 1a, 1b) aus entnommen werden und/oder appliziert werden.

Weitere geeignete Ausführungsformen sind diejenigen, wie sie in WO 2005/093002 A1, insbesondere durch die Figuren 1 bis 11, beschrieben sind. Die Verpackungen der WO 2005/093002 sind durch eine Inkorporierung über Referenz (incorporation by reference) integrierter Bestandteil des vorliegenden Dokumentes und können mit der vorgängig im Detail beschriebenen wässrigen Haftvermittlerzusammensetzung gefüllt werden und so erfindungsgemässe Packungen bilden.

Die beschriebene wässrige Haftvermittlerzusammensetzung eignet sich insbesondere als Primer, vorzugsweise als Primer für Kleb- und Dichtstoffe. Durch die Verwendung eines derartigen Primers wird die Haftung verbessert.

Somit umfasst die Erfindung auch ein Verfahren zur Verklebung oder zum Abdichten. Von diesem Verfahren sind insbesondere die folgenden drei Varianten bevorzugt.

In der ersten Variante umfasst es die Schritte
i) Applikation einer beschriebenen wässrigen Haftvermittlerzusammensetzung auf ein zu verklebendes oder abzudichtendes Substrat **S1**
ii) Applikation eines Klebstoffes oder Dichtstoffes auf die abgelüftete Zusammensetzung, welche sich auf dem Substrat **S1** befindet
iii) Kontaktieren des Klebstoffs oder Dichtstoffes mit einem zweiten Substrat **S2.**

In der zweiten Variante umfasst es die Schritte
i') Applikation einer beschriebenen wässrigen Haftvermittlerzusammensetzung auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der abgelüfteten Zusammensetzung, welche sich auf dem Substrat **S1** befindet.

In der dritten Variante umfasst es die Schritte
i") Applikation einer beschriebenen wässrigen Haftvermittlerzusammensetzung auf ein zu verklebendes oder abzudichtendes Substrat **S1**
ii") Ablüften der Zusammensetzung
iii") Applikation eines Klebstoffes oder Dichtstoffes zwischen die Oberflächen des Substrates **S1** und **S2**,

In allen drei Varianten besteht das zweite Substrat **S2** aus demselben oder unterschiedlichem Material wie das Substrat **S1.**

Typischerweise schliesst sich anschliessend an den Schritt iii), iii') oder iii") ein Schritt iv) des Aushärtens des Kleb- oder Dichtstoffes an.

Als Klebstoff kann grundsätzlich jeder Klebstoff verwendet werden. Die vorteilhaften Haftverbesserungen haben sich jedoch insbesondere bei Kleb-oder Dichtstoffen gezeigt, in welchen dieser ein Polyurethanklebstoff ist, welcher isocyanatgruppen aufweisende Polyurethanprepolymere enthält. Derartige Polyurethanklebstoffe sind kommerziell breit erhältlich insbesondere unter dem Namen Sikaflex® von Sika Schweiz AG.

Das Substrat **S1** und/oder **S2** können vielfältiger Art sein. Bevorzugt ist mindestens eines der Substrates **S1** oder **S2** Glas oder Glaskeramik oder Aluminium oder eine Aluminiumlegierung.

Weiterhin bevorzugt ist mindestens eines der Substrates **S1** oder **S2** Silber insbesondere ein Silberaufdruck auf Glas oder Glaskeramik.

Es hat sich gezeigt, dass Glas und Keramik im Vergleich zu Silberaufdruck weniger sensitiv auf die Haftvermittlerzusammensetzungen reagieren. Deshalb ist es von Vorteil, geringere Silankonzentrationen auf Glas und Keramik zu verwenden, um Unterschiede in den einzelnen wässrigen Haftvermittlerzusammensetzungen untereinander festzustellen.

Die Substrate können bei Bedarf vor dem Applizieren des Dicht- oder Klebstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Besonders geeignet ist das Verfahren zum Verkleben von Scheiben. Deshalb ist in einer bevorzugten Ausführungsform das Substrat **S1,** respektive **S2,** Glas oder Glaskeramik und das Substrat **S2,** respektive **S1,** ein Lack oder ein lackiertes Metall oder eine lackierte Metalllegierung.

Es hat sich insbesondere gezeigt, dass Mercaptosilane zu einer starken Haftverbesserung von einkomponentigen Polyurethanklebstoffen auf Silber oder auf Silber-basierenden Zusammensetzungen oder Legierungen, führen. Besonders gute Haftverbesserung erfolgt auf Silber.

Aufgrund dieses Verfahrens entstehen verklebte Artikel. Derartige Artikel stellen vorzugsweise ein Transportmittel, insbesondere ein Automobil, Bus, Lastkraftwagen, Schienenfahrzeug, ein Schiff oder ein Luftfahrzeug dar.

Es hat sich gezeigt, dass das beschriebene Verfahren insbesondere gut geeignet ist zum Verkleben von Scheiben mit integrierter Antenne. Derartige Antennenanschlusskontakte sind typischerweise aus Silber oder Silberbasierenden Zusammensetzungen oder Legierungen, insbesondere in Form von Silberaufdrucken, auf der Scheibe vorhanden. Typischerweise weisen Teile des Randbereiches der Scheibe - wo der Klebstoff appliziert wird - derartige Oberflächen auf. Es ist somit wichtig, dass der Klebstoff neben Glas und Glaskeramik auch gute Haftung auf Silber, Silberbasierenden Zusammensetzungen beziehungsweise Legierungen aufweist. Figur 2 stellt schematisch eine Heckansicht eines Automobiles 20 mit einer Scheibe 7 neuerer Generation mit integrierter Antenne 12 dar.

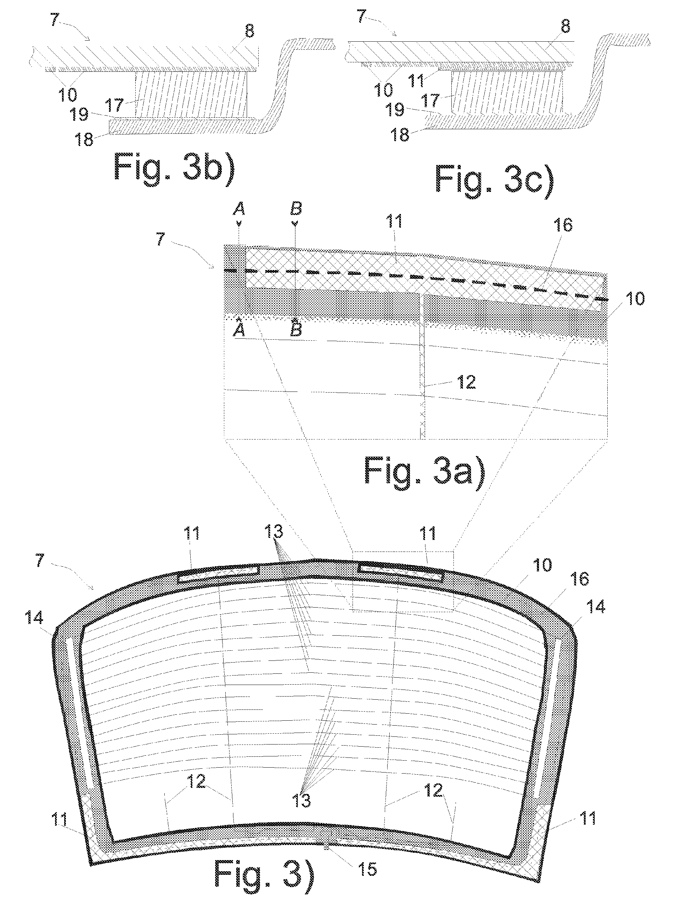

Figur 3 stellt schematisch eine derartige Scheibe 7 mit integrierter Antenne 12 dar. Der Silberaufdruck für die Antenne 11 befindet sich an verschiedenen Orten auf der Glaskeramik 10 im Randbereich der Scheibe 7. Die Antennen 12 werden nach dem Einbau über die Silberaufdrucke 11 für die Antenne mit einem Antennenanschlussstück 15 mit dem Sende- oder Empfangsgerät (nicht gezeigt) im Innern des Fahrzeugs 20 verbunden. Zusätzlich sind auf der Glaskeramik 10 noch Metallaufdrucke 14 für die Verbindung mit der Scheibenheizung 13 vorhanden.

Figur 3a stellt eine Vergrösserung eines Randbereiches der Scheibe 7 mit einem derartigen Silberaufdruck 11, welcher mit der Antennen 12 verbunden ist, und welche vom Rand ins Innere der Scheibe hin angeordnet ist, um einen guten Empfang und/oder Abstrahlung zu gewährleisten. Die Scheibe 7 weist einen Glaskeramikaufdruck 10 im Randbereich der Scheibe auf. Der Polyurethanklebstoff 17 wird im Randbereich entlang der Klebelinie 16 aufgetragen.

Figur 3b, beziehungsweise Figur 3c, stellen einen Querschnitt durch eine eingebaute Scheibe 7 entlang des Querschnitts *A-A,* beziehungsweise entlang des Querschnitts *B-B,* in Figur 3a dar. Auf dem Glas 8 befindet sich die Glaskeramik 10. In Figur 3b ist der Polyurethanklebstoff 17 direkt mit der Glaskeramik 10. In Figur 3c klebt der Polyurethanklebstoff 17 auf dem Silberaufdruck 11 für die Antenne. Der Klebstoff 17 ist auf der anderen Seite mit dem Flansch 18 des Automobiles 20 verbunden. Der Flansch 18 ist mit einem Automobillack lackiert. Zur Gewährleistung der Haftung ist in der gezeigten Ausführungsform ein Primer 19 auf dem Lack appliziert, so dass zwischen lackiertem Flansch 18 und Klebstoff 17 eine Primerschicht 19 vorhanden ist.

Selbstverständlich ist die Erfindung nicht auf die gezeigten und beschriebenen Ausführungsbeispiele beschränkt. Es versteht sich, dass die vorstehend genannten Merkmale der Erfindung nicht nur in der jeweils angegebenen Kombination, sondern auch in anderen Modifikationen, Kombinationen und Abänderungen oder in Alleinstellung verwendbar sind, ohne den Rahmen der Erfindung zu verlassen.

### Bezugszeichenliste

- 1: erste Kammer
- 2: zweite Kammer
- 3: Trennwand
- 4,4': Aussenwände
- 5: Verpackung
- 6: Packung
- K1: erste Komponente
- K2: zweite Komponente
- 7: Scheibe
- 8: Glas
- 9: Primer
- 10: Glaskeramik
- 11: Silberaufdruck für Antenne
- 12: Antenne
- 13: Scheibenheizung
- 14: Metallaufdruck für Heizungsverbindung
- 15: Antennenanschlussstück
- 16: Klebstoffauftragslinie
- 17: Polyurethanklebstoff
- 18: Flansch
- 19: Primer
- 20: Automobil

### Beispiele

Es wurden unterschiedliche Komponenten **K1** bestehend aus den Silanen gemäss den Angaben der Tabelle 1 hergestellt. Die Komponenten **1** bis **8** entsprechen hierbei erfindungsgemässen Komponenten **K1,** während die Komponenten **R1** bis **R9** Vergleichskomponenten darstellen.

### Verwendete Rohstoffe:

- "A1120": N-(2-Aminoethyl)-3-aminopropyl-trimethoxysilan Silquest® A1120, GE Silicones, Schweiz
- "A1170": Bis(trimethoxysilylpropyl)amin Silquest® A1170, GE Silicones, Schweiz
- "A1110": 3-Aminopropyl-trimethoxysilan Silquest® A1110, GE Silicones, Schweiz
- "A189": 3-Mercaptopropyl-trimethoxysilan Silquest® A189, GE Silicones, Schweiz
- "TEOS": Tetraethoxysilan Fluka Chemie AG, Schweiz
- "A171": Vinyltrimethoxysilan Silquest® A171, GE Silicones, Schweiz
- "MTMS": Methyltrimethoxysilan Fluka Chemie AG, Schweiz Hydropalat® 120, Cognis, Deutschland
- "HS 2627": Dynasylan® HYDROSIL 2627, Degussa Deutschland Aminosiloxan, aminomodifiziertes Alkylpolysiloxan

**Tabelle 1. Zusammensetzungen von unterschiedlichen Komponenten K1.**

| ***K1:*** | ***R1*** | ***R2*** | ***R3*** | ***R4*** | ***R5*** | ***1*** | ***2*** | ***3*** | ***4*** | ***5*** | ***6*** | ***7*** | ***8*** | ***9*** | ***R6*** | ***R7*** | ***R8*** | ***R9*** | ***R10*** |
|---|---|---|---|---|---|---|---|---|---|---|---|---|---|---|---|---|---|---|---|
| *A1120* | 1 | 1 | | | 1 | 1 | | | 1 | | 1 | 1 | 1 | | 1 | 1 | | 1 | |
| *A1170* | | | 1 | | | | 1 | | | 1 | | | | | | | | | |
| *A1110* | | | | | | | | 1 | | | | | | | | | 1 | | |
| *HS2627* | | | | | | | | | | | | | | 1 | | | | | 1 |
| *A 189* | | | | 1 | | 1 | 1 | 1 | 1 | 1 | 1 | 1 | 1 | 1 | 1 | 1 | 1 | | |
| *TEOS* | | 1 | | | | | | | 1 | 1 | | | | | | | | | |
| *A171* | | | | | | | | | | | | | | | | | | 1 | |
| *MTMS* | | | | | 1 | | | | | | 0.1 | 0.2 | 0.4 | | 0.5 | 1 | 0.5 | | |

Aus diesen unterschiedlichen ersten Komponenten **K1** wurden nun durch Vermischen einer zweiten Komponente **K2** wässrige Haftvermittlerzusammensetzungen hergestellt.

Als Substratuntergrund wurden verwendet
- Floatglass (Zinnseite für Haftungsprüfung verwendet), Rocholl, Deutschland
- ESG Keramik, Ferro 14251, Rocholl, Deutschland
- Silberaufdruck:Silberaufdruckbereiche auf original BMW-Heckscheibe 3er Serie (Serienstand Juli /2006)

Es wurde hierfür für Glas und Keramik als Substratuntergrund 0.5 Gew.-% der jeweiligen Komponente **K1** mit 99.5 % einer Komponente **K2-1** bestehend aus 0.5 Gewichtsteilen Hydropalat® 120, 1 Gewichtsteil Essigsäure (100%) und 98 Gewichtsteilen Wasser vermischt.

Für Silberaufdruck als Substratuntergrund wurde 1.5 Gew.-% der jeweiligen Komponente **K1** mit 98.5 % einer Komponente **K2-2** bestehend aus 0.5 Gewichtsteilen Hydropalat® 120, 1 Gewichtsteil Essigsäure (100%) und 97 Gewichtsteilen Wasser vermischt.

Die derart hergestellten wässrigen Haftvermittlerzusammensetzungen wurden mittels eines damit getränktem Zellulosetuches (Tela®, Tela-Kimberly Switzerland GmbH) auf das jeweilige Substrat aufgetragen, während 10 Minuten abgelüftet und eine Dreiecksraupe von Sikaflex®-250 DM-2 ("DM-2"), beziehungsweise Sikaflex®-250 PC-T ("PC-T"), bei 23°C und 50% rel. Luftfeuchtigkeit mittels Auspresskartusche und Düse aufgetragen. Beides sind einkomponentige feuchtigkeitshärtende Polyurethanklebstoffe, welche Polyurethanprepolymere mit Isocyanatgruppen enthalten und sind kommerziell erhältlich bei Sika Schweiz AG.

Der Klebstoff wurde nach einer Aushärtezeit von 6 Tagen Klimaraumlagerung ('KL') (23°C, 50% rel. Luftfeuchtigkeit), sowie nach einer anschliessenden Wasserlagerung ('WL') in Wasser bei 23°C während 6 Tagen, sowie nach einer anschliessend Kataplasma-Lagerung (,CP') von 6 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch visuelle Bestimmung des kohäsiven Anteils der Haftfläche:

Je höher der Anteil an kohäsivem Bruch ist, umso besser wird die Verklebung eingeschätzt. Testresultate mit Kohäsionsbrüchen von weniger als 50 %, insbesondere weniger als 40 %, gelten typischerweise als ungenügend.

**Tabelle 2. Haftresultate von DM-2 auf Floatglass von verschiedenen wässrigen Zusammensetzungen bestehend aus der Komponente K2-1 und unterschiedlichen Komponenten K1.**

| ***K1:*** | ***R1*** | ***R2*** | ***R4*** | ***R5*** | ***1*** | ***6*** | ***7*** | ***8*** | ***R6*** | ***R7*** | ***R8*** | ***R9*** |
|---|---|---|---|---|---|---|---|---|---|---|---|---|
| KL | 100 | 90 | 70 | 50 | 100 | 100 | 100 | 95 | 80 | 100 | 80 | 100 |
| WL | 5 | 50 | 20 | 20 | 100 | 100 | 95 | 40 | 30 | 30 | 50 | 70 |
| CP | 100 | 70 | 5 | 30 | 100 | 100 | 100 | 100 | 100 | 100 | 70 | 100 |

**Tabelle 3. Haftresultate von DM-2 auf ESG Keramik von verschiedenen wässrigen Zusammensetzungen bestehend aus der Komponente K2-1 und unterschiedlichen Komponenten K1.**

| ***K1:*** | ***R1*** | ***R2*** | ***R3*** | ***R4*** | ***R5*** | ***R10*** | ***1*** | ***2*** | ***3*** | ***4*** | ***5*** | ***6*** | ***9*** |
|---|---|---|---|---|---|---|---|---|---|---|---|---|---|
| KL | 100 | 100 | 10 | 0 | 5 | 100 | 100 | 100 | 100 | 100 | 100 | 100 | 100 |
| WL | 100 | 100 | 0 | 0 | 0 | 30 | 100 | 100 | 100 | 100 | 100 | 100 | 100 |
| CP | 100 | 100 | 10 | 0 | 0 | 10 | 100 | 100 | 100 | 100 | 100 | 100 | 60 |

**Tabelle 4. Haftresultate von PC-T auf Silberbeschichtung von verschiedenen wässrigen Zusammensetzungen bestehend aus der Komponente K2-2 und unterschiedlichen Komponenten K1.**

| ***K1:*** | ***R1*** | ***R2*** | ***R3*** | ***1*** | ***2*** | ***4*** | ***5*** |
|---|---|---|---|---|---|---|---|
| KL | 0 | 5 | 0 | 100 | 100 | 100 | 50 |
| WL | 0 | 0 | 0 | 80 | 90 | 80 | 50 |
| CP | 0 | 0 | 0 | 60 | 50 | 70 | 60 |

Die Haftergebnisse der Tabellen 2 bis 4 zeigen, dass mit den erfindungsgemässen Zusammensetzung gleichzeitig auf Glas, Silberaufdruck und Keramik eine gute Haftung erreicht werden kann, während bei den Vergleichsbeispielen zumindest bei einem dieser Untergründen Schwächen auftreten.

Für Tabelle 5 wurden wässrige Zusammensetzungen hergestellt, welche aus 2 Gew.-% Silan, bzw. 2 Gew.-% Silanmischung, die aus den jeweiligen Silanen in den angegebenen Gewichtsteilen gemischt wurde, 0.5 Gew.-% Hydropalat® 120, 1 Gew.-% Essigsäure (100%) und 96.5 Gew.-% Wasser besteht.

Von diesen wässrigen Haftvermittlerzusammensetzungen wurde die Lagerstabilität untersucht, indem die wässrige Zusammensetzung nach unterschiedlichen Anzahl Tagen der Lagerung bei Raumtemperatur visuell beurteilt wurde.

War die Zusammensetzung klar, wurde sie mit einem "i.O." bewertet und als gut bewertet. Trat eine leichte Trübung auf wurde sie mit einem "I.T." bewertet. War eine starke Trübung vorhanden, d.h. hatte milchigen Aspekt, wurde sie mit einem "T" bewertet. Beim Auftreten von Ausfällungen wurde mit "A" bewertet. Die Bewertungen "T" und insbesondere "A" sind ungenügend. Derartige Zusammensetzungen sind praktisch nicht mehr brauchbar als Haftvermittlerzusammensetzung.

**Tabelle 5 Stabilität von wässrigen Haftvermittlerzusammensetzungen.**

| | | | Lagerzeit [d] | | | | | |
|---|---|---|---|---|---|---|---|---|
| | *A1120* | *A189* | 0 | 1 | 7 | 14 | 21 | 28 |
| ***R11*** | 1 | 0 | i.O. | i.O. | i.O. | i.O. | i.O. | i.O. |
| ***R12*** | 0 | 1 | i.O. | i.O. | A | A | A | A |
| ***10*** | 1 | 10 | i.O. | i.O. | I.T. | A | A | A |
| ***11*** | 1 | 5 | i.O. | i.O. | i.O. | T | T | A |
| ***12*** | 1 | 2 | i.O. | i.O. | i.O. | I.T. | T | A |
| ***13*** | 1 | 1 | i.O. | i.O. | i.O. | I.T. | T | A |

Die Ergebnisse aus Tabelle 5 zeigen, dass wässrige Zusammensetzungen von Mercaptosilanen der Formel (II) Probleme mit der Lagerstabilität aufweisen. Die Ergebnisse zeigen aber ebenso gut, dass durch den Zusatz von Aminosilanen der Formel (I) diese Lagerprobleme stark reduziert, bzw. eliminiert werden können. Es können erfindungsgemässe Zusammensetzungen hergestellt werden, welche über exzellente Lagerstabilität verfügen.

## Patentansprüche

1. Wässrige Haftvermittlerzusammensetzung umfassend
- mindestens ein Aminosilan der Formel(I) oder mindestens ein Aminosiloxan **AS**, welches aus einer Kondensationsreaktion eines Aminosilans der Formel (I) mit mindestens einem weiteren Silan erhalten wird, 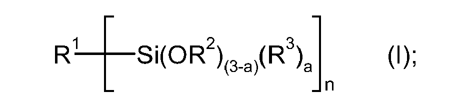
- mindestens ein Mercaptosilan der Formel (II); 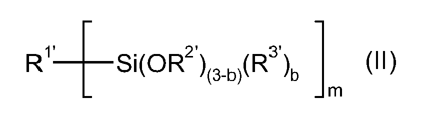
und welche entweder einen Gehalt von 0 bis 45 Gew.-%, insbesondere 0 bis 25 Gew.-%, bezogen auf das Gewicht des Aminosilans oder des Aminosiloxans **AS**, an Alkylsilanen aufweist,
oder in welcher das Verhältnis der Anzahl Mole Alkylsilane zu Anzahl Mole Aminosilan oder Aminosiloxan **AS** einen Wert von 0 - 0.60, insbesondere 0 - 0.33 beträgt;
wobei
R¹ für einen n-wertigen organischen Rest mit mindestens einer primären und/oder sekundären Aminogruppe steht,
R^{1'} für einen m-wertigen organischen Rest mit mindestens einer Mercaptogruppe steht,
R² und R^{2'} unabhängig von einander für H oder eine Alkylgruppe mit 1 bis 4 C-Atome oder für eine Acylgruppe steht;
R³ und R^{3'} unabhängig von einander für H oder für eine Alkylgruppe mit 1 bis 10 C-Atome steht;
a und b unabhängig von einander für einen Wert von 0, 1 oder 2 steht; und n und m unabhängig voneinander für die Werte 1, 2, 3 und 4 steht.

2. Wässrige Haftvermittlerzusammensetzung gemäss Anspruch 1, **dadurch gekennzeichnet, dass** die Zusammensetzung zusätzlich mindestens ein Tetraalkoxysilan der Formel (IV) aufweist
Si(OR⁴)₄ (IV)
wobei R⁴ unabhängig von einander für H oder eine Alkylgruppe mit 1 bis 4 C-Atome oder für eine Acylgruppe steht.

3. Wässrige Haftvermittlerzusammensetzung gemäss Anspruch 1 oder 2, **dadurch gekennzeichnet, dass** die Zusammensetzung frei von Alkylsilanen ist.

4. Wässrige Haftvermittlerzusammensetzung gemäss einem der vorhergehenden Ansprüche, **dadurch gekennzeichnet, dass** die Zusammensetzung frei von Organosilanen OS ist, deren organische Rest, welcher über eine Si-C-Bindung an das Siliziumatom gebunden ist, mindestens eine funktionelle Gruppe aufweist, welche mit der Aminogruppe des Aminosilans der Formel (I) oder mit der Mercaptogruppe des Mercaptosilans der Formel (II) reagieren kann.

5. Wässrige Haftvermittlerzusammensetzung gemäss einem der vorhergehenden Ansprüche, **dadurch gekennzeichnet, dass** die Zusammensetzung frei von Organosilanen ist, deren organischer Rest, welcher über eine Si-C-Bindung an das Siliziumatom gebunden ist, Hydroxylgruppen aufweist.

6. Wässrige Haftvermittlerzusammensetzung gemäss einem der vorhergehenden Ansprüche, **dadurch gekennzeichnet, dass** das Aminosilan der Formel (I) die Formel (V) aufweist
H₂N-R⁵-Si(OR²)₍₃₋ₐ₎(R³)ₐ (V)
wobei R⁵ für eine lineare oder verzweigte Alkylengruppe mit 1 bis 6 C-Atomen, insbesondere für Propylen, steht.

7. Wässrige Haftvermittlerzusammensetzung gemäss einem der Ansprüche 1 bis 5, **dadurch gekennzeichnet, dass** das Aminosilan der Formel(I) sekundäre Aminogruppen aufweist.

8. Wässrige Haftvermittlerzusammensetzung gemäss Anspruch 7, **dadurch gekennzeichnet, dass** das Aminosilan der Formel (I) die Formel (VI) oder (VII) oder (VIII) aufweist 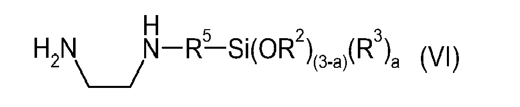 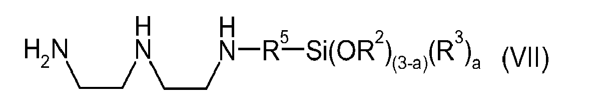 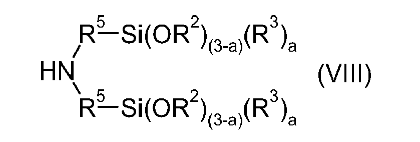 wobei R⁵ für eine lineare oder verzweigte Alkylengruppe mit 1 bis 6 C-Atomen, insbesondere für Propylen, steht.

9. Wässrige Haftvermittlerzusammensetzung gemäss einem der vorhergehenden Ansprüche, **dadurch gekennzeichnet, dass** das Mercaptosilan der Formel (II) die Formel (IX) aufweist
HS-R^{5'}-Si(OR^{2'})_{(3-b)}(R^{3'})_{b} (IX)
wobei R^{5'} für eine lineare oder verzweigte Alkylengruppe mit 1 bis 6 C-Atomen, insbesondere für Propylen, steht.

10. Wässrige Haftvermittlerzusammensetzung gemäss einem der vorhergehenden Ansprüche, **dadurch gekennzeichnet, dass** das für die Herstellung des Aminosiloxans **AS** ein Alkylsilan verwendet wird.

11. Wässrige Haftvermittlerzusammensetzung gemäss einem der vorhergehenden Ansprüche, **dadurch gekennzeichnet, dass** die wässrige Haftvermittlerzusammensetzung weiterhin mindestens ein Tensid umfasst.

12. Wässrige Haftvermittlerzusammensetzung gemäss einem der vorhergehenden Ansprüche, **dadurch gekennzeichnet, dass** die wässrige Haftvermittlerzusammensetzung weiterhin mindestens eine Säure, insbesondere eine organische Säure, umfasst.

13. Wässrige Haftvermittlerzusammensetzung gemäss einem der vorhergehenden Ansprüche, **dadurch gekennzeichnet, dass** der Gewichtsanteil der Summe von Aminosilan der Formel (I), Aminosiloxan **AS,** Mercaptosilan der Formel (II) und Wasser sowie, falls vorhanden, Tetraalkoxysilan der Formel (IV) mehr als 80 Gew.-%, insbesondere mehr als 90 Gew.-%, am Gewicht der wässrigen Haftvermittlerzusammensetzung beträgt.

14. Wässrige Haftvermittlerzusammensetzung gemäss einem der vorhergehenden Ansprüche, **dadurch gekennzeichnet, dass** der Gewichtsanteil der Summe von Aminosilan der Formel (I), Aminosiloxan **AS,** Mercaptosilan der Formel (II) und, falls vorhanden, Tetraalkoxysilan der Formel (IV) mehr als 0.1 Gew.-%, insbesondere zwischen 0.1 und 10 Gew.-%, bevorzugt zwischen 0.1 und 5 Gew. -%, meist bevorzugt zwischen 0.5 bis 2 Gew.-%, am Gewicht der wässrigen Haftvermittlerzusammensetzung beträgt.

15. Wässrige Haftvermittlerzusammensetzung gemäss einem der vorhergehenden Ansprüche, **dadurch gekennzeichnet, dass** die wässrige Haftvermittlerzusammensetzung aus Wasser, mindestens einem Aminosilan der Formel (I) oder mindestens einem Aminosiloxan **AS,** mindestens einem Mercaptosilan der Formel (II) und gegebenenfalls einem Tensid und einer Säure, insbesondere einer organischen Säure, sowie der daraus möglichen Hydrolyse- und / oder Kondensationsprodukte besteht.

16. Wässrige Haftvermittlerzusammensetzung gemäss einem der vorhergehenden Ansprüche, **dadurch gekennzeichnet, dass** die wässrige Haftvermittlerzusammensetzung zweikomponentig ist und aus einer ersten Komponente **K1** und einer zweiten Komponente **K2** besteht,
wobei die erste Komponente **K1** mindestens
das Aminosilan der Formel (I) oder das Aminosiloxan **AS** und das Mercaptosilan der Formel (II) und, falls vorhanden, das Tetraalkoxysilan der Formel (IV) umfasst
und die zweite Komponente **K2** mindestens Wasser umfasst.

17. Wässrige Haftvermittlerzusammensetzung gemäss Anspruch 16, **dadurch gekennzeichnet, dass** die zweite Komponente **K2** mindestens ein Tensid umfasst.

18. Wässrige Haftvermittlerzusammensetzung gemäss Anspruch 16 oder 17, **dadurch gekennzeichnet, dass** die zweite Komponente **K2** mindestens eine Säure, insbesondere eine organische Säure umfasst.

19. Packung (6) bestehend aus
einer Verpackung (5), welche zwei durch mindestens eine Trennwand (3) voneinander getrennten Kammern (1,2) aufweist;
und
einer wässrigen zweikomponentigen Haftvermittlerzusammensetzung gemäss einem der Ansprüche 16 bis 18,
wobei die erste Komponente **K1** in der ersten Kammer (1) und die zweite Komponente **K2** in der zweiten Kammer (2) vorhanden ist.

20. Packung (6) gemäss Anspruch 19, **dadurch gekennzeichnet, dass** die Trennwand (3) aus einem Material gefertigt ist, das durch die Aufbringung von Druck bricht oder einreisst.

21. Verwendung einer wässrigen Haftvermittlerzusammensetzung gemäss einem der Ansprüche 1 bis 18 als Primer.

22. Verfahren zur Verklebung oder zum Abdichten umfassend die Schritte
i) Applikation einer wässrigen Haftvermittlerzusammensetzung gemäss einem der Ansprüche 1 bis 18 auf ein zu verklebendes oder abzudichtendes Substrat **S1**
ii) Applikation eines Klebstoffes oder Dichtstoffes auf die abgelüftete Zusammensetzung, welche sich auf dem Substrat **S1** befindet
iii) Kontaktieren des Klebstoffs oder Dichtstoffes mit einem zweiten Substrat **S2**;
oder
i') Applikation einer wässrigen Haftvermittlerzusammensetzung gemäss einem der Ansprüche 1 bis 18 auf ein zu verklebendes oder abzudichtendes Substrat **S1**
ii') Applikation eines Klebstoffes oder Dichtstoffes auf die Oberfläche eines zweiten Substrates **S2**
iii') Kontaktieren des Klebstoffes oder Dichtstoffes mit der abgelüfteten Zusammensetzung, welche sich auf dem Substrat **S1** befindet;
oder
i") Applikation einer wässrigen Haftvermittlerzusammensetzung gemäss einem der Ansprüche 1 bis 18 auf ein zu verklebendes oder abzudichtendes Substrat **S1**
ii") Ablüften der Zusammensetzung
iii") Applikation eines Klebstoffes oder Dichtstoffes zwischen die Oberflächen des Substrates **S1** und **S2**,
wobei das zweite Substrat **S2** aus demselben oder unterschiedlichem Material wie das Substrat **S1** besteht.

23. Verfahren gemäss Anspruch 22, **dadurch gekennzeichnet, dass** anschliessend an den Schritt iii), iii') oder iii") ein Schritt iv) des Aushärtens des Kleb- oder Dichtstoffes anschliesst.

24. Verfahren gemäss Anspruch 22 oder 23, **dadurch gekennzeichnet, dass** der Kleb- oder Dichtstoff ein Polyurethanklebstoff ist, welcher isocyanatgruppen aufweisende Polyurethanprepolymere enthält.

25. Verfahren gemäss einem der Ansprüche 22 bis 24, **dadurch gekennzeichnet, dass** mindestens eines der Substrates S1 oder S2 Glas oder Glaskeramik oder Aluminium oder eine Aluminiumlegierung ist.

26. Verfahren gemäss einem der Ansprüche 22 bis 25, **dadurch gekennzeichnet, dass** mindestens eines der Substrates S1 oder S2 Silber insbesondere ein Silberaufdruck auf Glas oder Glaskeramik, ist.

27. Verfahren gemäss einem der Ansprüche 22 bis 26, **dadurch gekennzeichnet, dass** das Substrat **S1,** respektive **S2,** Glas oder Glaskeramik ist und dass das Substrat **S2,** respektive **S1,** ein Lack oder ein lackiertes Metall oder ein lackierte Metalllegierung ist.

28. Verwendung von Mercaptosilanen zur Haftverbesserung von feuchtigkeitshärtenden einkomponentigen Polyurethanklebstoffen auf Silber oder auf Silber-basierenden Zusammensetzungen oder Legierungen

29. Artikel zu dessen Herstellung ein Verfahren gemäss einem der Ansprüche 22 bis 27 durchgeführt wird.

30. Artikel gemäss Anspruch 29, **dadurch gekennzeichnet, dass** der Artikel ein Transportmittel, insbesondere ein Automobil, Bus, Lastkraftwagen, Schienenfahrzeug, ein Schiff oder ein Luftfahrzeug ist.
